# EUROPEAN PATENT SPECIFICATION

(11) **EP 1 147 826 B1**
(45) Date of publication and mention of the grant of the patent: **29.09.2004**
(21) Application number: 01610041.4
(22) Date of filing: 17.04.2001
(51) Int. Cl.: B08B 15/02

(54) **A working station for laminar air flow**
Arbeitsstation mit laminarer Luftströmung
Station de travail à écoulement laminaire d'air

(30) Priority: 17.04.2000 DK 200000649
(43) Date of publication of application: 24.10.2001
(73) Proprietor: Jouan Nordic A/S, 3450 Allerod (DK)
(72) Inventor: Traeholt, Erik, DK-2750 Ballerup (DK)
(74) Representative: Jorgensen, Bjorn Barker

(56) References cited:
- EP-A- 0 888 831
- WO-A-95/13146
- GB-A- 2 222 705
- GB-A- 2 309 918
- US-A- 4 100 847
- US-A- 4 561 303

## Description

The present invention relates to a laminar air flow work station, comprising a working chamber with a handling opening open towards the surroundings, a fan which can circulate air through the working chamber via a filter, and a fan which can blow out air through an outlet opening in the work station.

US 4,100,847 describes a work station in which air is recirculated by means of a fan through a working chamber, the air being blown down into the compartment through a diffusor and passing through a filter under the compartment. Through the handling opening of the cabinet, a certain volume of air is also drawn in from the surroundings, and by means of the same fan a corresponding volume of air is blown out through an outlet opening in the form of a connecting piece arranged in the top of the cabinet and connected with a central extraction system. Under the outlet connecting piece a flap has been arranged that can be pivoted across the outlet opening, making it possible to compensate for the varying action of the central extraction system on the volume of air flowing out through the outlet connecting piece. The compensation is done manually by pivoting the flap.

In the known laminar air flow work stations it is generally a disadvantage that the internal air flow in the cabinet can be negatively affected as a consequence of a varying load on the central extraction system or possible operational failures thereof, such as clogging of filters, fan stoppage and the like. Even if attempts are made to automatically adjust the volume of air flowing out through the outlet opening of the work station by means of the built-in fans of the work station, a blockage of the discharge channel, for example, will in any case prevent the function. Such blockage of the outlet flow consequently prevents the drawing in of air through the handling opening of the working chamber, and thus the safety function of the work station ceases, as contaminated air can flow out of the handling opening to the surroundings.

Attempts have been made to solve the problem by letting the outlet connecting piece of the work station open out directly to the surroundings and placing a strong extraction hood above it so that the central extraction system removes more air than flows out from the work station such an apparatus is known from GB 2 309 918 A. Although a blockage of the central extraction system does not prevent the operation of the work station, the filtered air from the working chamber flows directly out to the surroundings, and at work with toxic products, for example, this is unacceptable.

The object of the present invention is to provide a work station in which the normal internal operation is substantially independent of the function of the central extraction system, while it is possible to minimize the risk of undesired blowing out of air from the work station or the central extraction system to the surroundings.

In view of this object, the work station according to the invention is characterized in that a direction detector is arranged at the equalizing opening of the exhaust chamber for recording the direction of flow through the opening.

Arranging a direction detector at an equalizing opening of an exhaust chamber inserted between the outlet opening of the work station and the connection to the central extraction system makes it possible very reliably to record any fault condition in which the central extraction system does not function correctly, while the capacity of the central extraction system may vary within wide limits during normal operation without substantially influencing the operation of the work station, as the variations are equalized by a varying inward flow of fresh air through the equalizing opening of the exhaust chamber. If a fault condition occurs in which the air blown out from the work station is not completely removed by the central extraction system, air will immediately flow out through the equalizing opening, which will be recorded by the direction detector, and an alarm signal can be actuated so that staff present can take the necessary precautions, such as turning off the fans and closing the handling opening. The operation of the work station may possibly be changed automatically with a view to reduced drawing in of fresh air and thus reduced blowing out of air from the working chamber.

In a preferred embodiment, a separate velocity detector is furthermore arranged at the equalizing opening for recording the velocity of the flow through the opening. A potential fault situation can thus be recorded at an early time, as a lower limit value for the velocity of the inflowing air through the equalizing opening can be defined so that a warning or alarm signal can be actuated if this limit value is not achieved. The combination of a direction detector and a velocity detector further provides double certainty of recording a fault situation where the air flow through the equalizing opening changes direction, as the fault situation can be recorded either by means of the velocity detector as a consequence of low air velocity during the change of direction, or by means of the direction detector, as the direction of flow changes. The combination of direction detector and velocity detector further allows the use of a velocity detector which is relatively accurate, but which has a measuring range limited to a low velocity range comprising a lower limit value, as at higher air velocities it may be sufficient to record the direction of the air.

The direction detector may advantageously comprise a channel in which an electric heating element is arranged between two heat detectors so that each heat detector is closest to a respective end of the channel. When the air flows from a first end of the channel, the heat detector closest to the other end of the channel will record a higher temperature than the heat detector closest to the first end of the channel, as the heated air flows towards the other end of the channel. Such direction detector is structurally very simple and consequently inexpensive while being able, in a suitable design, to function very reliably at highly varying air velocities; it may, for example, be sensitive to air velocities from 0.1 to 10 m/s. It is furthermore an advantage of this direction detector that in practice it need not affect the characteristic of the air flow which it records, as the channel containing the heat detectors may have a relatively small extent in relation to the cross-section of the equalizing opening. Thus, no elements are required that disturb the air flow, such as is the case, for example, when measuring air velocities by means of a pressure monitor, where a metering orifice has to be inserted in the flow path.

In a structurally particularly simple embodiment, the direction detector comprises a pipe through which the channel extends transversely, each end of the channel being constituted by a hole in the pipe wall, and the heating element and the heat detectors are mounted on a printed circuit board inserted in the pipe.

The equalizing opening is preferably located at the end of a channel-shaped section of the exhaust chamber. In this way a more well-defined air flow at the direction and velocity detectors can be ensured and thus more reliable recording of the air flow occurring at any time.

In a structurally advantageous embodiment, the exhaust chamber is constituted by a flat, substantially box-shaped compartment mounted on top of the work station so that the outlet opening is open into the compartment at a first narrow end side thereof, the equalizing opening is formed in or constitutes a second end side of the compartment opposite to the first end side, and the outlet connecting piece is mounted in the top side of the compartment at a distance from the equalizing opening. In a simple manner, this makes it possible to ensure a well-defined air flow at the equalizing opening whether air is drawn in by the equalizing opening, or whether air is blown out through it from the outlet opening or from the central extraction system, possibly from other work stations connected thereto. Furthermore, at normal operation of the work station, good throughflow of air from the outlet opening to the outlet connecting piece can be ensured.

The invention will now be described below in more detail by means of examples of embodiments and with reference to the schematic drawing, in which
Fig. 1 shows a work station according to the invention,
Fig. 2 gives a side view of the direction detector in the work station of Fig. 1, and
Fig. 3 is an axial section through the direction detector along the line III-III in Fig. 2.

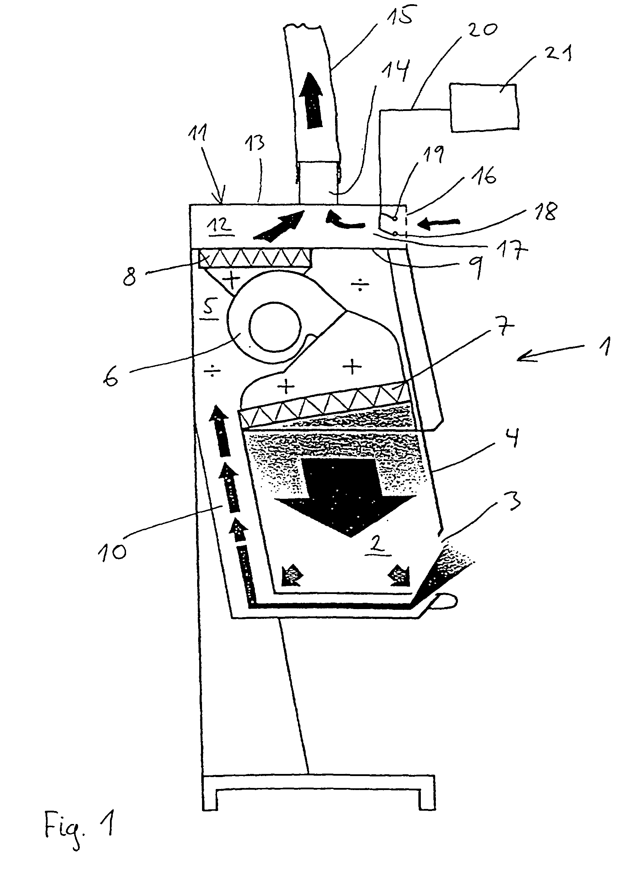

Fig. 1 shows a laminar air flow work station, a so-called LAF (Laminar Air Flow) cabinet 1, which is used for laboratory work on, for example, biological material that requires a clean environment and which may also constitute a health hazard to human beings.

The laminar air flow cabinet 1 comprises a working chamber 2 with a handling opening 3 at the front of the cabinet and open towards the surroundings. The size of the handling opening 3 can be varied by means of a pane 4 displaceable in an upward and downward direction so that a person can sit in front of the cabinet and work with his or her hands inside the working chamber, the working chamber 2 being visible through the pane 4.

Above the working chamber 2 a fan 6 is arranged in a fan chamber 5, the fan drawing air in from the fan chamber 5, and, through a filter and diffusor member 7, blowing most of the air, for example 75 per cent, down through the working chamber 2 and the remaining air out through an outlet opening in the form of an outlet filter 8 in the ceiling 9 of the fan chamber. Thus, clean air is flowing in a laminar flow down through the working chamber 2, thereby avoiding turbulence, which might disturb the work on, for example, powder. The fan 6 may comprise two separate fans, one blowing air down into the working chamber 2, the other blowing air up through the outlet filter 8.

Via an upward channel 10 located behind the working chamber 2, the fan chamber 5 communicates with the bottom of the working chamber 2 and the handling opening 3. In operation, most of the air is thus recirculated through the working chamber 2, while a minor volume of air is exchanged, air being drawn in through the handling opening 3 and air being blown out through the outlet filter 8. As air is constantly flowing in through the handling opening 3, contaminating substances cannot escape to the surroundings. In Fig. 1, "+" indicates an overpressure in relation to "-".

On top of the ceiling 9 of the fan chamber 5, a low box-shaped compartment 11 is mounted enclosing an exhaust chamber 12 so that the top side of the outlet filter 8 faces into the exhaust chamber 12 at one end thereof. In the top side 13 of the compartment 11, an outlet connecting piece 14 is mounted and connected via a pipe 15 to a central extraction system, not shown. At the end of the compartment 11 located opposite to the outlet filter 8, the exhaust chamber 12 is open to the surroundings through an equalizing opening 16. In the drawing, the equalizing opening 16 constitutes an entire end side of the compartment 11, but it may also be formed as a hole in a wall. There is a certain distance between the equalizing opening 16 and both the outlet connecting piece 14 and the outlet filter 8 so that a section of the exhaust chamber 12 forms a channel 17 in which the air flow is relatively well-defined.

Immediately inside the equalizing opening 16, is arranged a direction detector 18 in the channel 17 for recording the direction of the air flowing through the equalizing opening 16, and a velocity detector 19 for recording the velocity of the air flow through the opening 16. Via electrical wires 20, the detectors 18, 19 are connected with a control system 21, which may be mounted on the cabinet 1.

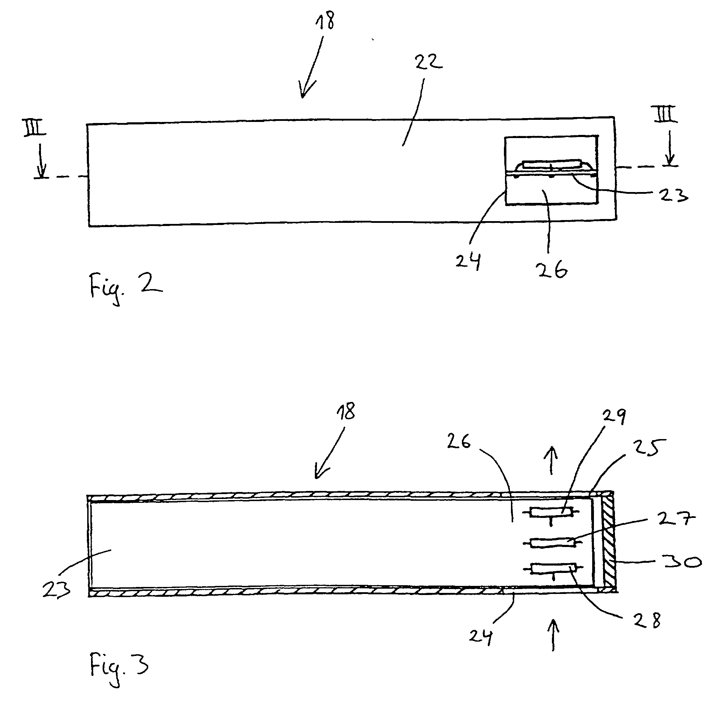

Fig. 2 shows the direction detector 18 in the work station 1 in Fig. 1. The direction detector 18 comprises a pipe 22 in which a printed circuit board 23 is inserted so that it extends substantially along the axis of the pipe. At one end of the pipe 22, it is bored through transversely so that two opposite detector holes 24, 25 in the pipe wall form respective ends of a flow channel 26 transversely through the pipe 22. The flow channel 26 is shown in a longitudinal cross-section in Fig. 3, in which the printed circuit board 23 is further shown from above. The end of the pipe 22 at the detector holes 24, 25 is closed with a plug 30. In the flow channel 26, right between the detector holes 24, 25 in the pipe wall, an electric heating element 27 is mounted on the printed circuit board 23. Furthermore, a first heat detector 28 is mounted on the printed circuit board between the heating element 27 and one detector hole 24, and a second heat detector 29 is mounted between the heating element 27 and the other detector hole 25.

The heat detectors 28, 29 may be heat-sensitive integrated circuits or, for example, PTC resistors. On the printed circuit board 23, other electronic components, not shown, may be mounted, which are necessary for recording the temperature difference between the heat detectors 28, 29, such as a voltage regulator, but such components, known *per se,* may also be mounted in the control system 21.

In the channel 17 in the exhaust chamber 12 at the equalizing opening 16, the direction detector 18 is mounted so that the first detector hole 24 in the pipe 22 faces towards the equalizing opening 16, which means that the axis of the pipe 22 extends in the transverse direction of the channel 17. During normal operation of the work station, as described above, air flows in through the equalizing opening 16, and part of this air will therefore flow in through the first detector hole 24 in the pipe 22 and out again through the other detector hole 25. As the heating element 27 is heated to a temperature higher than the temperature of the air, the second heat detector 29 will record a higher temperature than the first heat detector 28, as the heated air passes over the second heat detector 29, and this is recorded as a normal condition in the control system 21. If, on the contrary, air flows out through the equalizing opening 16, the first heat detector 28 will record the higher temperature, and this will be recorded as a fault condition in the control system 21.

The velocity detector 19 may be constructed from a pipe, not shown, with a transverse channel and an inserted printed circuit board in a manner similar to that of the direction detector 18. For measuring the air velocity, an integrated circuit can be used, comprising a heating element kept heated to a constant temperature, for example 180°C, and where the energy used for the heating is recorded electronically. By measuring the current air temperature with another circuit, the air velocity can be calculated.

The control system 21 can be integrated in a control panel, not shown, arranged on the work station 1 and capable of controlling the operation of the work station and informing the user of the operating condition via an output device. Limit values for air velocity, fault condition and alarm functions may, for example, be adjustable depending on the type of product worked on.

The exhaust chamber may be designed in other ways than the one shown; it may, for example be arranged at the side of the work station. The flow channel 26 in the direction detector 18 may also be designed in other ways; it may, for example, extend axially in a pipe. Furthermore, the location of fans and filters in the work station can be varied; a filter may, for example, be arranged below the working chamber 2 for filtering the air drawn out of the working chamber. In that case the outlet filter 8 in the outlet opening may possibly be omitted.

## Claims

1. A laminar air flow work station (1) comprising a working chamber (2) with a handling opening (3) open towards the surroundings, a fan (6) which can circulate air through the working chamber (2) via a filter (7), and a fan (6) which can blow out air through an outlet opening (8) in the work station (1), wherein the outlet opening (8) communicates with an exhaust chamber (12) having an outlet connecting piece (14) for connection to a central extraction system, and having an equalizing opening (16) towards the surroundings, **characterized in that** a direction detector (18) is arranged at the equalizing opening (16) for recording the direction of flow through the opening (16).

2. A work station according to claim 1, **characterized in that** a separate velocity detector (19) is furthermore arranged at the equalizing opening (16) for recording the velocity of the flow through the opening (16).

3. A work station according to claim 1 or 2, **characterized in that** the direction detector (18) comprises a channel (26) in which an electric heating element (27) is arranged between two heat detectors (28, 29) so that each heat detector (28, 29) is closest to a respective end of the channel (26).

4. A work station according to claim 3, **characterized in that** the direction detector (18) comprises a pipe (22) through which the channel (26) extends transversely, each end of the channel (26) being constituted by a hole (24, 25) in the pipe wall, and that the heating element (27) and the heat detectors (28, 29) are mounted on a printed circuit board (23) inserted in the pipe (22).

5. A work station according to any one of the preceding claims, **characterized in that** the equalizing opening (16) is located at the end of a channel-shaped section (17) of the exhaust chamber (12).

6. A work station according to any one of the preceding claims, **characterized in that** the exhaust chamber (12) is constituted by a flat, substantially box-shaped compartment (11) mounted on top of the work station (1) so that the outlet opening (8) is open into the compartment (11) at a first narrow end side thereof, that the equalizing opening (16) is formed in or constitutes a second end side of the compartment (11) opposite to the first end side, and that the outlet connecting piece (14) is mounted in the top side (13) of the compartment (11) at a distance from the equalizing opening (16).

## Patentansprüche

1. Arbeitsstation (1) mit laminarer Luftströmung, mit einer Arbeitskammer (2) mit einer Handhabungsöffnung (3), die zur Umgebung hin offen ist, einem Gebläse (6), welches Luft über einen Filter (7) durch die Arbeitskammer (2) zirkulieren kann, und einem Gebläse (6), welches Luft durch eine Auslassöffnung (8) in der Arbeitsstation (1) ausblasen kann, wobei die Auslassöffnung (8) mit einer Abströmkammer (12) in Verbindung steht, die ein Auslassverbindungsteil (14) zur Verbindung mit einem zentralen Extraktionssystem hat, und die eine Ausgleichsöffnung (16) zur Umgebung hin hat, **dadurch gekennzeichnet, dass** ein Richtungsdetektor (18) an der Ausgleichsöffnung (16) angeordnet ist, um die Richtung der Strömung durch die Öffnung (16) aufzuzeichnen.

2. Arbeitsstation nach Anspruch 1, **dadurch gekennzeichnet, dass** ferner ein separater Geschwindigkeitsdetektor (19) an der Ausgleichsöffnung (16) angeordnet ist, um die Geschwindigkeit der Strömung durch die Öffnung (16) aufzuzeichnen.

3. Arbeitsstation nach Anspruch 1 oder 2, **dadurch gekennzeichnet, dass** der Richtungsdetektor (18) einen Kanal (26) aufweist, in welchem ein elektrisches Heizelement (27) zwischen zwei Wärmedetektoren (28, 29) angeordnet ist, so dass jeder Wärmedetektor (28, 29) dem jeweiligen Ende des Kanals (26) am nächsten liegt.

4. Arbeitsstation nach Anspruch 3, **dadurch gekennzeichnet, dass** der Richtungsdetektor (18) eine Röhre (22) umfasst, durch welche sich der Kanal (26) quer erstreckt, wobei jedes Ende des Kanals (26) durch ein Loch (24, 25) in der Röhrenwand gebildet wird, und dadurch, dass das Heizelement (27) und die Wärmedetektoren (28, 29) auf einer Leiterplatte (23) angebracht sind, die in die Röhre (22) eingesetzt ist.

5. Arbeitsstation nach einem der vorhergehenden Ansprüche, **dadurch gekennzeichnet, dass** die Ausgleichsöffnung (16) am Ende eines kanalförmigen Abschnittes (17) der Abströmkammer (12) angeordnet ist.

6. Arbeitsstation nach einem der vorhergehenden Ansprüche, **dadurch gekennzeichnet, dass** die Abströmkammer (12) aus einem flachen, im Wesentlichen kastenförmigen Abteil (11) aufgebaut ist, das oben auf der Arbeitsstation (1) angebracht ist, so dass die Auslassöffnung (8) in das Abteil (11) hinein an dessen erster schmaler Stirnseite offen ist, dass die Ausgleichsöffnung (16) in einer zweiten Stirnseite des Abteils (11), gegenüber der ersten Stirnseite, ausgebildet ist oder diese bildet, und dass das Auslassverbindungsteil (14) an der Oberseite (13) des Abteils (11) in einem Abstand von der Ausgleichsöffnung (16) angebracht ist.

## Revendications

1. Station de travail à écoulement laminaire d'air (1) comprenant une chambre de travail (2) avec une ouverture de traitement (3) donnant sur le milieu environnant, un ventilateur (6) qui peut faire circuler de l'air à travers la chambre de travail (2) par l'intermédiaire d'un filtre (7), et un ventilateur (6) qui peut souffler de l'air à travers une ouverture de sortie (8) dans la station de travail (1), dans laquelle l'ouverture de sortie (8) communique avec une chambre d'évacuation (12) ayant une pièce de raccord de sortie (14) pour un raccord à un système d'extraction central, et ayant une ouverture d'équilibrage (16) donnant sur le milieu environnant, **caractérisée en ce qu'**un détecteur de direction (18) est agencé au niveau de l'ouverture d'équilibrage (16) pour enregistrer la direction d'écoulement à travers l'ouverture (16).

2. Station de travail selon la revendication 1, **caractérisée en ce qu'**un détecteur de vitesse séparé (19) est en outre agencé au niveau de l'ouverture d'équilibrage (16) pour enregistrer la vitesse de l'écoulement à travers l'ouverture (16).

3. Station de travail selon la revendication 1 ou 2, **caractérisée en ce que** le détecteur de direction (18) comprend un canal (26) dans lequel un élément chauffant électrique (27) est agencé entre deux détecteurs de chaleur (28, 29) de sorte que chaque détecteur de chaleur (28, 29) est le plus proche d'une extrémité respective du canal (26).

4. Station de travail selon la revendication 3, **caractérisée en ce que** le détecteur de direction (18) comprend un tuyau (22) à travers lequel le canal (26) s'étend transversalement, chaque extrémité du canal (26) étant constituée d'un trou (24, 25) dans la paroi de tuyau, et que l'élément chauffant (27) et les détecteurs de chaleur (28, 29) sont montés sur une carte de circuit imprimé (23) insérée dans le tuyau (22).

5. Station de travail selon l'une quelconque des revendications précédentes, **caractérisée en ce que** l'ouverture d'équilibrage (16) est située au niveau de l'extrémité d'une section en forme de canal (17) de la chambre d'évacuation (12).

6. Station de travail selon l'une quelconque des revendications précédentes, **caractérisée en ce que** la chambre d'évacuation (12) est constituée d'un compartiment plat sensiblement en forme de boîte (11) monté par-dessus la station de travail (1) de sorte que l'ouverture de sortie (8) donne sur le compartiment (11) au niveau d'un premier côté d'extrémité étroit de celui-ci, que l'ouverture d'équilibrage (16) est formée dans ou constitue un second côté d'extrémité du compartiment (11) en face du premier côté d'extrémité, et que la pièce de raccord de sortie (14) est montée dans le côté supérieur (13) du compartiment (11) à une distance à partir de l'ouverture d'équilibrage (16).
